# EUROPÄISCHE PATENTSCHRIFT

(11) **EP 1 323 566 B1**
(45) Veröffentlichungstag und Bekanntmachung des Hinweises auf die Patenterteilung: **24.01.2007**
(21) Anmeldenummer: 02027790.1
(22) Anmeldetag: 12.12.2002
(51) Int. Cl.: B60K 11/04, B60R 19/34

(54) **Haltevorrichtung für ein Kühlmodul**
Mounting device for a radiator
Dispositif de fixation d'un radiateur

(30) Priorität: 14.12.2001 DE 10161432
(43) Veröffentlichungstag der Anmeldung: 02.07.2003
(73) Patentinhaber: HBPO GmbH, 59552 Lippstadt (DE); Benteler Automobiltechnik GmbH & Co. KG, 33102 Paderborn (DE)
(72) Erfinder: Braun, Dieter, Dipl.-Ing., 33378 Rheda-Wiedenbrück (DE); Kröning, Achim, Dr. Ing., 33102 Paderborn (DE); Wang, Hui, Dr. Ing., 33102 Paderborn (DE)
(74) Vertreter: Elbertzhagen, Otto

(56) Entgegenhaltungen:
- DE-A- 3 433 935
- DE-C- 3 246 583
- DE-C- 4 035 347
- DE-C- 19 611 934
- US-A- 3 789 944
- US-B1- 6 260 609

## Beschreibung

Die Erfindung bezieht sich auf eine Anordnung zur Halterung eines an der Frontseite eines Kraftfahrzeugs, insbesondere eines PKWs, angeordneten Kühlmoduls der im Oberbegriff des Patentanspruchs 1 näher bezeichneten Art.

Eine entsprechende Haltevorrichtung ist aus der gattungsgemässen Patentschrift DE 32 46 583 C1 bekannt. Bei der dortigen Ausführung ist für den unteren Bereich des Kühlmoduls lediglich ein einziges Halteglied vorgesehen, welches aus einem an einem Winkelblech gehaltenen Gummiblock besteht. An einem mit der Fahrzeugkarosserie festen Bauteil wird bei der bekannten Vorrichtung eine federnde Halteklammer befestigt, die in der Einbaulage nach hinten offen ist und in die der erwähnte Gummiblock eingerastet werden kann. Bei einer solchen Haltevorrichtung kann zwar bei einem von der Fahrzeugfrontseite her wirkenden Stoß das unterseitig lösbare Kühlmodul nach hinten hin in Fahrzeuglängsrichtung ausweichen, jedoch wird mittels der Halterungsvorrichtung ein definierter Ausweichweg nicht vorgegeben. Vielmehr ist nach dem Ausrasten des Gummiblocks aus der karosseriefest anzubringenden Halteklammer das Kühlmodul nur noch in seinem oberen Schwenklager gehalten, wobei der Schwenkweg durch ein Anschlagen des Kühlmoduls an dahinterliegenden Bauteilen begrenzt wird.

Aus der Patentschrift DE 40 35 347 C1 ist eine ähnliche Haltevorrichtung für ein in einer schwenkbaren Konsole angeordnetes Kühlmodul bekannt, bei der an dieser Konsole Zugfedern angreifen, welche ein unkontrolliertes Ausschwenken der Konsole bei einer Stoßbeaufschlagung an deren Frontseite oder der Frontseite des Kühlmoduls verhindern. Insoweit hat man es hier mit einer elastischen Anlage des Kühlmoduls an einem zur Frontseite hin angeordneten Widerlager zu tun, was allein schon wegen der erforderlichen Rüttelfestigkeit problematisch und von der dauerhaften Funktionsfähigkeit der Zugfedern abhängig ist.

Es ist deshalb schon eine anderweitige Haltevorrichtung vorgeschlagen worden, um das um ein oberes Lager schwenkbare Kühlmodul mit seinen unteren Haltepunkten an karosseriefesten Bauteilen so festzulegen, daß in der üblichen Gebrauchslage das Kühlmodul unverrückbar fixiert ist, jedoch bei einem Frontcrash des Fahrzeugs über den nach hinten ausweichenden Stoßfängerquerträger eine Entriegelung der unteren Haltepunkte des Kühlmoduls erfolgt. Hierbei sind die Halteglieder in Fahrzeuglängsrichtung verschiebbar ausgebildet, so daß über den Verschiebeweg hinweg das Kühlmodul mit seinem unteren Bereich infolge Führung nicht unkontrollierbar nach hinten wegschwenken kann.

Die beschriebenen Haltevorrichtungen erfüllen selbstverständlich ihren Zweck nur solange, wie nicht im Falle eines vehementeren Frontcrashs des betreffenden Fahrzeugs erheblichere Schäden auftreten, die ohnehin zu kostspieligen Reparaturen führen. Wichtig ist, daß bei Crashfällen mit geringen Geschwindigkeiten bis zu 16 km/h, auf welche die standardisierten Typschadentests abgestellt sind, das Kühlmodul als wertiges Bauteil nicht beschädigt wird. Dadurch entfallen bei derartigen Crashfällen aufwendigere Reparaturen, und es kann bei einem leichteren Frontschaden das betreffende Fahrzeug noch mit eigener Kraft eine Werkstatt anfahren.

In Abkehr von dem vorstehend erörterten Stand der Technik beschreibt die Offenlegungsschrift DE 199 43 987 A1 einen Vorbaubereich für Kraftfahrzeuge, bei dem nicht nur Crashboxen vorhanden sind, die bestimmungsgemäß im Crashfall Energie aufnehmen. Vielmehr schließt der Vorbaubereich ein Kühlelement ein, welches zur Verbesserung der Energieaufnahme im Falle eines Fahrzeugaufpralls sich verformen soll.

Des weiteren ist aus der Patentschrift 196 11 934 C1 ein Frontmodul für Kraftfahrzeuge bekannt, welches eine an Crashboxen befestigte Kühlerhalterung aufweist. Die entsprechenden Halteelemente sind am hinteren Ende der Crshboxen angeordnet, welche an die vorderen Stirnseiten der Fahrzeuglängsträger angesetzt sind. Eine mögliche Verschwenkung des daran gehaltenen Kühlmoduls im Crashfall ist bei dieser Anordnung nicht berücksichtigt, sie kommt hierbei auch deshalb nicht in Betracht, weil bei einer Verformung der Crashboxen die Kühlerhalterung nicht in Fahrzeuglängsrichtung nach hinten hin wandert.

Der Erfindung liegt nun die Aufgabe zugrunde, eine Anordnung zur Halterung eines Kühlmoduls der eingangs genannten Art zu schaffen, bei der das Kühlmodul in seinem unteren Bereich über die daran zu befestigenden Halteglieder sowohl im normalen Betriebsfall als auch im Crashfall der vorbeschriebenen Art dauerhaft an einem mit der Fahrzeugkarosserie fest zu verbindenden Bauteil festgelegt ist, welches bei einem solchen Crashfall eine vorbestimmte Verformung erfährt.

Diese Aufgabe wird bei einer Halterungsvorrichtung der gattungsbildenden Art nach der Erfindung durch die kennzeichnenden Merkmale des Patentanspruchs 1 gelöst.

Für die Erfindung ist wesentlich, daß es sich bei den Deformationselementen, an denen das Kühlmodul mit seinem unteren Bereich festgelegt ist, um Bauteile handelt, die sich bei einem Frontalcrash des jeweiligen Fahrzeugs bestimmungsgemäß in Fahrzeuglängsrichtung stauchen. Solche Deformationselemente werden im Fachjargon auch als Crashboxen bezeichnet. Hierdurch besteht die Möglichkeit, über den Verformungsweg, den die Befestigungsstelle für das betreffende Halteglied bei der Stauchung des Deformationselementes zurücklegt, das Kühlmodul in seinem unteren Bereich in Fahrzeuglängsrichtung gesehen nach hinten hin mitzunehmen. Ist das Halteglied am Vorderende des Deformationselementes befestigt, das bei einer Stauchung den größten Verformungsweg zurücklegt, dann erreicht man für das Unterende des Kühlmoduls den größtmöglichen Schwenkausschlag. Durch Verlegen des Anbindungspunktes des Haltegliedes an dem Deformationselement zu dessen Hinterende hin, kann der Verschiebeweg des Haltegliedes und damit der Schwenkweg des Kühlmoduls im Verhältnis zum Gesamtverformungsweg des stauchbaren Deformationselementes variiert werden. Bei solchen Crashboxen, die - wie oft üblich - eine von ihrem Vorderende bis zu ihrem Hinterende hin zunehmende Verformungsfestigkeit aufweisen, womit im Crashfalle die Auffaltung der Crashbox an deren Vorderende beginnt und sich je nach Schwere des zu absorbierenden Stoßes nach hinten hin fortsetzt, kann sogar festgelegt werden, daß ein Verschwenken des Kühlmoduls nach hinten hin erst bei vehementeren Stößen erfolgt.

Das Festlegen der Halteglieder des Kühlmoduls an den Deformationselementen bedeutet darüberhinaus eine außerordentliche Konstruktions- und Montagevereinfachung, weil zusätzliche, mit der Fahrzeugkarosserie fest zu verbindende Bauteile nicht benötigt werden. So können bei den aus Metall, insbesondere aus Stahl, bestehenden Crashboxen schon bei deren Fertigung die in der Regel aus demselben Material bestehenden Halteglieder sogleich angeschweißt werden, so daß daran die Halteglieder vorhanden sowie richtig plaziert sind und bei der Montage der Crashboxen an dem betreffenden Fahrzeug nicht nachgerüstet werden müssen.

Oft werden die Kühlmodule in Montageträger eingefügt, und in diesen Fällen können die an den Crashboxen vorstehenden Halteglieder entweder am Kühlmodul selbst oder am Montageträger befestigt werden, je nachdem ob das Kühlmodul im Montageträger oder der gesamte Montageträger mit dem Kühlmodul am Oberende schwenkbar gehalten ist.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: in schematischer, perspektivischer Darstellung eine Haltevorrichtung für das Unterende eines Kraftfahrzeug-Kühlmoduls,
- Fig. 2: die Haltevorrichtung nach Fig. 1 im Zustand nach einem geringeren Frontcrash des Fahrzeugs und
- Fig. 3: die Haltevorrichtung nach den Fig. 1 und 2 im Zustand nach einem vehementeren Frontcrash des Fahrzeugs.

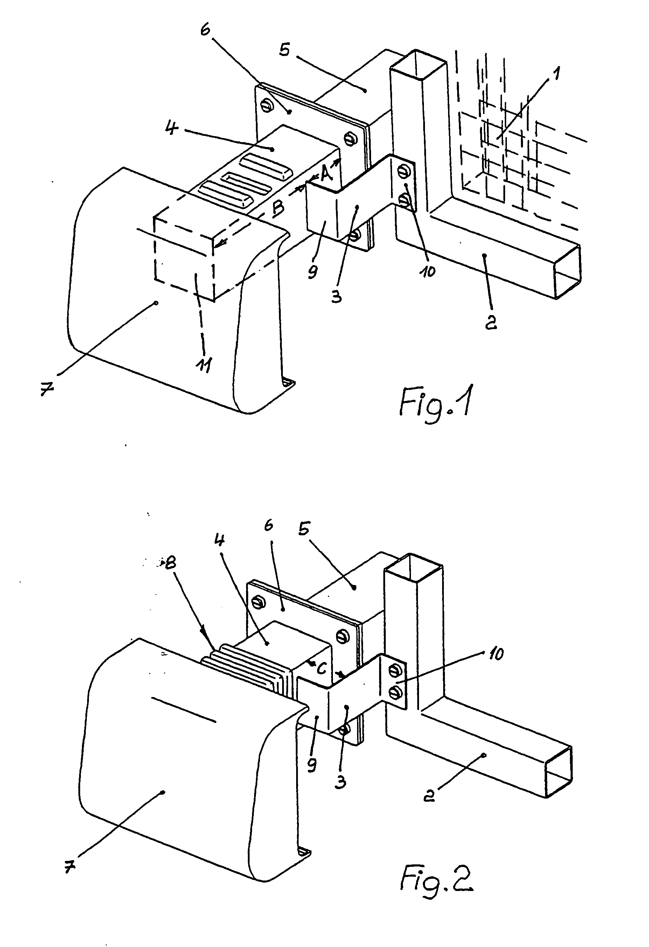

Im einzelnen zeigt Fig. 1 den unteren Eckabschnitt eines Kühlmoduls 1, das zur frontseitigen Anordnung an einem Kraftfahrzeug, insbesondere an einem PKW, bestimmt ist. Das Kühlmodul 1 ist an seinem in der Zeichnung nicht dargestellten Oberende um eine in Fahrzeugquerrichtung liegende Achse schwenkbar gehalten. Folglich muß das Kühlmodul 1 an unteren Haltepunkten, die sich vorzugsweise in den beiden unteren Eckbereichen befinden, relativ zur Fahrzeugkarosserie fixiert werden.

Bei modernen Fahrzeugkonstruktionen ist das Kühlmodul 1 in einem Montageträger 2 gehalten, hierbei ist dann nicht nur das Kühlmodul 1 für sich schwenkbar sondern der gesamte Montageträger 2, der entsprechend an seinem Oberende in einem Schwenklager aufgehängt ist. Bei dieser Ausführung befinden sich die Haltepunkte zur Fixierung des Montageträgers 2 an dessen unteren Eckbereichen.

Die Verbindung des Kühlmoduls 1 oder des Montageträgers 2 an den unteren Haltepunkten mit einem karosseriefesten Bauteil erfolgt über ein Halteglied 3, welches bei dem dargestellten Ausführungsbeispiel mit dem Montageträger 2 verbunden ist. Bei dem Halteglied 3 handelt es sich um eine Winkellasche mit einer vorderen Abwinklung 9 und einer rückwärtigen Abwinklung 10, wobei über die letztere die Verbindung des Haltegliedes 3 mit dem Montagerahmen 2 vorgenommen ist.

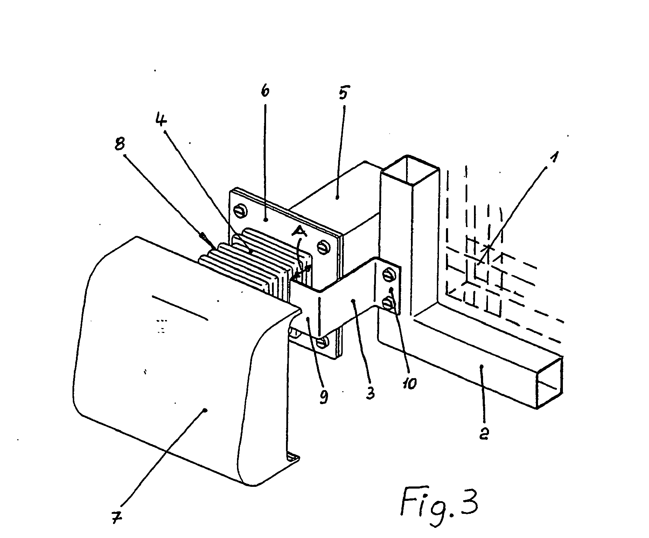

Über die vordere Abwinklung 9 ist das Halteglied 3 fest mit einem Deformationselement 4 verbunden, bei dem es sich um eine sogenannte Crashbox handelt. Dieses Deformationselement 4 ist zwischen dem Stirnende eines Fahrzeuglängsträgers 5 und einem Stoßfängerquerträger 7 angeordnet und erstreckt sich in der üblichen Einbaulage einer solchen Crashbox in Fahrzeuglängsrichtung. Erfolgt ein Stoß auf den Stoßfängerquerträger 7, der in Fahrzeuglängsrichtung oder zumindest mit einer erheblichen Kraftkomponente in Fahrzeuglängsrichtung gerichtet ist, was bei einem Frontalcrash eines Fahrzeugs der Fall ist, dann verformt sich das Deformationselement 4, und es bilden sich daran Auffaltungen 8, wie sie in Fig. 2 und Fig. 3 erkennbar sind. Infolge der Stauchung verkürzt sich das Deformationselement 4, welches eine von vorn nach hinten zunehmende Festigkeit gegen die Stauchungskräfte aufweisen kann. Bei schwächeren Stößen verformt sich somit nur der vordere Bereich des Deformationselementes 4, was in Fig. 2 dargestellt ist, und erst bei stärken Stößen bildet sich die durch Stauchung bedingte Auffaltung 8 über die gesamte Länge des Deformationselementes 4, was in Fig. 3 wiedergegeben ist.

Das Deformationselement 4 ist mit einem rückwärtigen Flansch 6 am Fahrzeugslängsträger 5 befestigt. Dieser Flansch 6 stellt somit das rückwärtige Ende des Deformationselementes 4 dar, welches bei einem Frontalcrash, sofern er bei einer minderen Geschwindigkeit bis zu 16 km/h vorkommt, seine Lage nicht verändert. Folglich eignet sich das hintere Ende des Deformationselementes 4 nicht dazu, daran den unteren Haltepunkt des Montageträgers 2 festzulegen, der bei einem Frontalcrash der genannten Art nach hinten wegwandern soll, wodurch der Montageträger 2 und damit das Kühlmodul 1 mit einem definierten Schwenk mit seinem Unterende nach hinten weg mitgenommen wird. Dazu ist vielmehr die vordere Abwinklung 9 des Haltegliedes 3 in einem Abstand A vom Hinterende des Deformationselementes 4 nach vorn hin weg angesetzt.

Das Deformationselement 4 und das Halteglied 3 stellen vorteilhaft eine vorgefertigte bauliche Einheit dar. In der Regel besteht ein solches Deformationselement 4 aus schweißbarem Stahl, und aus dem gleichen Material ist das Halteglied 3 gefertigt, das mit seiner Abwinklung 9 so mit dem Deformationselement 4 verschweißt ist, daß sich auch bei einer Verformung des Deformationselementes 4 über seine gesamte Länge hinweg, wie es in Fig. 3 dargestellt ist, das Halteglied 3 nicht von dem Deformationselement 4 lösen kann. Da die Auffaltungen 8 des Deformationselementes 4 sich in dessen Radialrichtung erstrecken, hält das als Winkellasche ausgebildete Halteglied 3 mit seinem mittleren Abschnitt, der zwischen der vorderen Abwinklung 9 und der rückwärtigen Abwinklung 10 liegt, einen deutlichen Abstand C (Fig. 2) von dem Deformationselement 4. Zudem erstreckt sich das Halteglied 3 mit seinem mittleren Abschnitt parallel zu dem Deformationselement 4 und greift nach hinten hin noch an dem rückwärtigen Flansch 6 des Deformationselementes 4 vorbei. Dies hängt allerdings lediglich davon ab, wo der jeweilige Haltepunkt des Montageträgers 2 bzw. des Kühlmoduls 1 in der Normalposition liegt.

Grundsätzlich könnte das Halteglied 3 mit seiner vorderen Abwinklung 9 am Vorderende 11 des Deformationselementes 4 befestigt sein, welches mit dem Stoßfängerquerträger 7 verbunden ist. Dies kommt jedoch dann nicht in Betracht, wenn bei geringeren Stößen und einer entsprechend geringeren Stauchung des Deformationselementes 4, welches sich hierbei nur an seinem Vorderende auffaltet, der Montageträger 2 mit dem Kühlmodul 1 noch nicht nach hinten weg verschwenkt werden soll. Bei dem dargestellten Ausführungsbeispiel hat in der Ausgangslage, die Figur 1 zeigt, die Befestigungsstelle der vorderen Abwinklung 9 des Haltegliedes 3 zum Vorderende 11 des Deformationselementes 4 einen wesentlich größeren Abstand B als zum rückwärtigen Ende des Deformationselementes 4, letzterer Abstand ist mit A bezeichnet. Bei einem geringeren Stoß verformt sich das Deformationselement 4 lediglich über einen Bereich, der bis zur Befestigungsstelle des Haltegliedes 3 reichen kann, und hierbei verändert sich der Abstand der Befestigungsstelle der vorderen Abwinklung 9 des Haltegliedes 3 zum rückwärtigen Ende des Deformationselementes 4 nicht, wie in Fig. 2 dargestellt ist. Bei einem vehementeren Stoß setzt sich die Stauchung des Deformationselementes 4 über die Befestigungsstelle des Haltegliedes 3 hinweg und kann bis zum rückwärtigen Flansch 6 des Deformationselementes 4 reichen. Dies ist in Fig. 3 wiedergegeben und hier hat sich der Abstand A der Befestigungsstelle des Haltegliedes 3 zum Befestigungsflansch 6 des Deformationselementes 4 hin deutlich verringert. Um den Betrag, um den hierbei der Abstand A kleiner geworden ist, hat hierbei das Halteglied 3, dessen Befestigungsstelle am Deformationselement 4 nach hinten gewandert ist, den Montageträger 2 in seinem unteren Bereich nach hinten hin in Fahrzeuglängsrichtung mitgenommen.

In der Zeichnung ist das Halteglied 3 als eine etwa Z-förmige Lasche dargestellt, die einstückig ist. In dieser Ausführung ist das Halteglied 3 nicht universell verwendbar, weil unterschiedliche Abstände zwischen der Befestigungsstelle am Deformationselement 4 und der Befestigungsstelle am Kühlmodul 1 bzw. am Montageträger 2 nicht ausgeglichen werden können. Deshalb kann das Halteglied 3 vorteilhaft zwei- oder mehrteilig ausgebildet werden, wobei nur das eine Endteil des Haltegliedes 3 dauerhaft mit dem Deformationselement 4 verbunden ist. Das zumindest eine weitere Teil kann an dem am Deformationselement 4 festen Teil austauschbar oder verstellbar angeordnet sein, es kann sogar ein spezifisches Bauteil des Kühlmoduls 1 oder des Montageträgers 2 sein. Im letzteren Fall stellt derjenige Teil, der am Deformationselement 4 angeschweißt oder anderweitig dauerhaft befestigt ist, das Halteglied im Sinne der Erfindung dar. Denn entscheidend ist auch bei dieser Ausführung, daß das betreffende Haltegliedteil an dem Deofmationselement 4, das auch als Crashbox zu bezeichnen ist, befestigt ist, welches sich im Crashfall bestimmungsgemäß in der Fahrzeuglängsrichtung verformt.

## Patentansprüche

1. Frontaufbau eines Kraftfahrzeugs, insbesondere eines PKWs, mit einem an seinem Oberende um eine in Fahrzeugquerrichtung liegende Achse schwenkbar gelagerten Kühlmodul (1) und mit am Kühlmodul (1) oder an einem das Kühlmodul (1) aufnehmenden Montageträger (2) jeweils im unteren Bereich befestigten Haltegliedern (3), die an karosseriefesten Bauteilen so gehalten sind, daß bei einem von der Fahrzeugfrontseite her wirkenden Stoß das Kühlmodul (1) mit seinem unteren Bereich in Fahrzeuglängsrichtung nach hinten hin ausweichen kann,
**dadurch gekennzeichnet,**
**daß** der Frontaufbau Karosseriefeste Träger (5) und davorgesetzte Deformationselemente (4), die in Fahrzeuglängsrichtung stauchbar sind, aufweist, und das jeweilige Halteglied (3), an dem seiner Befestigungsstelle am Kühlmodul (1) oder am Montageträger (2) nächstliegenden Deformationselement (4) in einem Abstand (A) von dessen am Träger (5) festliegenden Hinterende (6) unlösbar befestigt ist, wobei zwischen der Befestigungsstelle des Haltegliedes (3) am Deformationselement (4) und dessen Vorderende (11) ein Abstand (B) besteht, der größer als der Abstand (A) zwischen der Befestigungsstelle des Haltegliedes (3) am Deformationselement (4) und dem Hinterende (6) des Deformationselementes (4) ist.

2. Frontaufbau nach Anspruch 1,
**dadurch gekennzeichnet,**
**daß** das Deformationselement (4) eine von seinem Vorderende zu seinem Hinterende hin zunehmende, einer Stauchung entgegenwirkende Festigkeit hat.

3. Frontaufbau nach einem der Ansprüche 1 oder 2,
**dadurch gekennzeichnet,**
**daß** das Halteglied (3) eine parallel zur Längsrichtung des Deformationselements (4) sich erstreckende Mitnehmerlasche ist, deren Abstand (c) von der Außenseite des Deformationselements (4) größer als der Überstand der bei Stauchung des Deformationselements (4) in deren Querrichtung hervortretenden Auffaltungen (8)ist, wobei das Halteglied (3) eine zur Befestigungsstelle an dem Deformationselement (4) hin gerichtete Abwinklung (9) hat.

4. Frontaufbau nach Anspruch 3,
**dadurch gekennzeichnet,**
**daß** das Halteglied (3) an dem von der ersten Abwinklung (9) abliegenden Ende eine weitere Abwinklung (10) hat, die von dem Deformationselement (4) weggerichtet ist.

5. Frontaufbau nach einem der Ansprüche 1 - 4,
**dadurch gekennzeichnet,**
**daß** das Deformationselement (4) und das Halteglied (3) aus Metall bestehen, wobei das Halteglied (3) an dem Deformationselement (4) angeschweißt ist.

6. Frontaufbau nach einem der Ansprüche 1 - 5,
**dadurch gekennzeichnet,**
**daß** das Halteglied (3) aus zwei oder mehreren Teilen besteht, von denen die von der Befestigungsstelle am Deformationselement (4) wegliegenden Teile zwecks Anpassung an den Abstand zur Befestigungsstelle am Kühlmodul (1) oder am Montageträger (2) austauschbar und/oder relativ zueinander verstellbar sind.

## Claims

1. Front end for a motor vehicle, more particularly a passenger car, with a radiator module (1) which is mounted at its upper end for swivel movement about an axis lying in the transverse direction of the vehicle, and with holders (3) which are each fixed in the lower region on the radiator module (1) or on a mounting support (2) which holds the radiator module (1) and which are held on the component parts fixed on the bodywork so that in the event of impact acting from the front side of the vehicle the radiator module (1) can escape backwards by its lower region in the longitudinal direction of the vehicle,
**characterised in that**
the front end has supports (5) fixed on the bodywork and deformation elements (4) mounted in front of same which can compress in the longitudinal direction of the vehicle, and the relevant holder (3) is fixed non-detachable on the deformation element (4) which is closest to its fixing point on the radiator module (1) or on the mounting support (2), at a distance (A) from its rear end (6) which is fixed on the support (5), wherein between the fixing point of the holder (3) on the deformation element (4) and its front end (11) there is a spacing (B) which is greater than the spacing (A) between the fixing point of the holder (3) on the deformation element (4) and the rear end (6) of the deformation element (4).

2. Front end according to claim 1,
**characterised in that**
the deformation element (4) has a strength which increases from its front end to its rear end and which counteracts the compression.

3. Front end according to one of claims 1 or 2,
**characterised in that**
the holder (3) is an entrainment plate which extends parallel to the longitudinal direction of the deformation element (4) and whose spacing (C) from the outside of the deformation element (4) is greater than the overhang of the folds (8) which arise during compression of the deformation element (4) in their transverse direction wherein the holder (3) has an angled part (9) directed towards the fixing point on the deformation element (4).

4. Front end according to claim 3,
**characterised in that**
the holder (3) has at the end remote from the first angled part (9) a further angled part (10) which is directed away from the deformation element (4).

5. Front end according to one of claims 1 to 4,
**characterised in that**
the deformation element (4) and the holder (3) are made from metal wherein the holder (3) is welded to the deformation element (4).

6. Front end according to one of claims 1 to 5,
**characterised in that**
the holder (3) is made from two or more parts of which the parts lying away from the fixing point on the deformation element (4) can be interchanged and/or adjusted relative to one another in order to adapt to the spacing from the fixing point on the radiator module (1) or on the mounting support (2).

## Revendications

1. Structure frontale de véhicule automobile, notamment de voiture particulière, avec un radiateur (1) monté, à son extrémité supérieure, en pivotement sur un axe orienté dans la direction transversale du véhicule automobile, et avec des organes de retenue (3) qui, fixés chacun, dans la section inférieure, au radiateur (1) ou à un support de montage (2) portant ledit radiateur (1), sont maintenus sur des éléments solidaires de la carrosserie de sorte que, sous l'effet d'un choc agissant à partir de la partie frontale du véhicule automobile, le radiateur (1) peut dévier en arrière, avec sa section inférieure, dans la direction longitudinale du véhicule automobile,
**caractérisée en ce que**
la structure frontale présente des supports (5) associés à la carrosserie et, en amont de ceux-ci, des éléments de déformation (4) qui peuvent être écrasés dans la direction longitudinale du véhicule automobile, et **en ce que** chaque organe de retenue (3) est fixé de manière inamovible à l'élément de déformation (4) le plus proche de son point de fixation au radiateur (1) ou au support de montage (2), à un intervalle (A) de son extrémité arrière (6) fixée au support (5), un intervalle (B), plus grand que l'intervalle (A) entre le point de fixation de l'organe de retenue (3) à l'élément de déformation (4) et l'extrémité arrière (6) de l'élément de déformation (4), existant entre le point de fixation de l'organe de retenue (3) à l'éléments de déformation (4) et l'extrémité arrière de l'élément de déformation (4).

2. Structure frontale selon la revendication 1,
**caractérisée en ce que**
l'élément de déformation (4) présente une résistance à l'écrasement qui augmente de son extrémité antérieure à son extrémité postérieure.

3. Structure frontale selon revendication 1 ou 2,
**caractérisée en ce que**
l'organe de retenue (3) est une patte d'entraînement qui s'étend parallèlement à la direction longitudinale de l'élément de déformation (4) et dont l'intervalle (C), qui la sépare de la face extérieure de l'élément de déformation (4), est plus grand que la saillie des plis (8) se produisant dans son sens transversal lors de l'écrasement de l'élément de déformation (4), et l'organe de retenue (3) formant un coude (9) orienté vers le point de fixation à l'élément de déformation (4).

4. Structure frontale selon la revendication 3,
**caractérisée en ce que**
l'organe de retenue (3) présente, à l'extrémité opposée au premier coude (9), un autre coude (10) qui est orienté à l'opposé de l'élément de déformation (4).

5. Structure frontale selon l'une des revendications 1 à 4,
**caractérisée en ce que**
l'élément de déformation (4) et l'organe de retenue (3) sont en métal, l'organe de retenue (3) étant soudé à l'élément de déformation (4).

6. Structure frontale selon l'une des revendications 1 à 5,
**caractérisée en ce que**
l'organe de retenue (3) est composé de deux ou de plusieurs pièces, dont celles opposées au point de fixation à l'élément de déformation (4) peuvent être changées et / ou ajustées les unes par rapport aux autres aux fins d'adaptation à la distance du point de fixation au radiateur (1) ou au support de montage (2).
